# EUROPEAN PATENT APPLICATION

(11) **EP 1 531 475 A2**
(43) Date of publication of application: **18.05.2005**
(21) Application number: 04026565.4
(22) Date of filing: 09.11.2004
(51) Int. Cl.: G11B 27/10

(54) **Reproducing apparatus and reproducing method**

(30) Priority: 14.11.2003 JP 2003385429
(71) Applicant: Kabushiki Kaisha Toshiba, Tokyo 105-8001 (JP)
(72) Inventor: Tsumagari, Yasufumi, c/o Toshiba Corporation, Minato-ku Tokyo 105-8001 (JP); Kamibayashi, Tooru, c/o Toshiba Corporation, Minato-ku Tokyo 105-8001 (JP); Kanebo, Toshimitsu, c/o Toshiba Corporation, Minato-ku Tokyo 105-8001 (JP); Takahashi, Hideki, c/o Toshiba Corporation, Minato-ku Tokyo 105-8001 (JP); Nagai, Takeshi, c/o Toshiba Corporation, Minato-ku Tokyo 105-8001 (JP)
(74) Representative: Henkel, Feiler & Hänzel

(57) **Abstract**

A reproducing apparatus has a reading portion (22) which reads image information stored in a disk (D), a reproducing portion (23) which reproduces the image information read by the reader portion, a specifying portion (27-2) which specifies an object on the reproduced image information, and a display portion (30, 32) which makes a display relating to the object based on extended information associated with the object specified by the specifying portion.

## Description

The present invention relates to a reproducing apparatus, and more particularly to a reproducing apparatus and a reproducing method capable of displaying object associated information by directly providing an instruction to an object on an image.

Recently, many digital information devices handling image information has been developed, manufactured and become prevailingly popular. Among them, there is a demand for a digital information device capable of properly handling additional information as well as simply reproducing image information.

In a conventional technique (Jpn. Pat. Appln. KOKAI Publication No. 2002-152694) of such an optical disk device, there is disclosed an image program data producing apparatus for providing additional information to existing program information, a system adding specific product information to a scene of image information. In this manner, for example, additional information on a product item indicated in image information can be added to image information.

Furthermore, as documents associated therewith, there are known: Jpn. Pat. Appln. KOKAI Publication No. 11-020387, Jpn. Pat. Appln. KOKAI Publication No. 2002-183336, non-patent document 1: ISO/IEC 14496, non-patent document 2: IETF RFC 2326: "Real Time Streaming Protocol (RTSP), "Schulzrinne et al., 1998., non-patent document 3: IETF RFC 1889: "RTP: A Transport Protocol for Real-Time Applications, "Schulzrinne et al., 1996., non-patent document 4: ISO/IEC 15938, non-patent document 5: IETF RFC 2327: "SDP: Session Description Protocol," Handley et al., 1998, and non-patent document 6: ISO/IEC 14496.

However, in these related arts, although there is disclosed that additional information is added to program information, there is not disclosed how additional information is displayed while reproducing image information such as cinema in a state in which the information with additional information has been stored in a medium (a disk) such as a DVD (Digital Versatile Disc), and there is not disclosed a reproducing apparatus for that purpose. Therefore, there is a problem that additional information cannot be utilized while actually reproducing an image in an optical disk.

In addition, in the related arts, in the case where additional information added to image information is not included in a medium, for example, there is not disclosed how a user who reproduces the medium acquires and utilizes such additional information. Therefore, there is a problem that such additional information cannot be utilized while actually reproducing an optical disk.

An object of the present invention is to provide a reproducing apparatus for facilitating information supply by a user's intuitive operation displaying object associated information upon receipt of an instruction to be supplied to an object in a disk image.

A reproducing apparatus according to one embodiment of the present invention is a reproducing apparatus comprising: a reading portion which reads image information stored in a disk, a reproducing portion which reproduces the image information read by the reader portion, a specifying portion which specifies an object on the reproduced image information, and a display portion which makes a display relating to the object based on extended information associated with the object specified by the specifying portion.

In the reproducing apparatus according to one embodiment of the present invention, in a state in which image information stored in a disk is reproduced, for example, a region in which an actor (object) in a cinema screen is displayed is specified (clicked) by a pointer or the like, according to a user's operation. In this manner, a display relating to such an actor (object) is made by an operation relating to meta data or the like which is extended information.

Here, assuming that an object is an actor, a statement for explaining casting of the actor in cinema, name of the actor, and a state of the casting is displayed on a screen as a subtitle, for example. In addition, this object may be a disk in a room or a building located against a famous background, for example, without being limited to the actor on a screen. For example, a background image such as sky or mountain is selected as an object, and the selected object is clicked, whereby a date and time or a place may be indicated.

Furthermore, it is preferable that the meta data which is extended information be provided in a disk together with image information. However, in the case where the above meta data is not provided in the disk with the image information, for example, the data is supplied from a server or the like via a network, thereby make it easy to acquire data at a high speed. An example of data acquisition at a high speed is shown in an embodiment.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram depicting an example of a configuration of an optical disk device according to one embodiment of the present invention;
FIG. 2 is an illustrative view illustrating an example of display processing in the optical disk device according to one embodiment of the present invention;
FIG. 3 is an illustrative view illustrating a structure of object region data used by the optical disk device according to one embodiment of the present invention;
FIG. 4 is an illustrative view illustrating a data structure in a single unit of meta data used by the optical disk device according to one embodiment of the present invention;
FIG. 5 is an illustrative view illustrating a data structure of object attribute information possessed by the meta data used by the optical disk device according to one embodiment of the present invention;
FIG. 6 is an illustrative view illustrating a data structure of ID information possessed by the meta data used by the optical disk device according to one embodiment of the present invention;
FIG. 7 is an illustrative view illustrating a method for generating object meta data streams of which meta data used by the optical disc device, arranged in order of time stamps according to one embodiment of the present invention;
FIG. 8 is a view showing an example of an access point table for providing access at a high speed to a desired location in the object meta data streams in the optical disk device according to one embodiment of the present invention;
FIG. 9 is a view showing an example of a method for configuring a transmission packet of the meta data in the optical disk device according to one embodiment of the present invention;
FIG. 10 is a view showing another example of a method for configuring a transmission packet of the meta data in the optical disk device according to one embodiment of the present invention;
FIG. 11 is a view showing an example of procedures in the case where the optical disk device according to one embodiment of the present invention makes communication with a server device;
FIG. 12 is a view showing an example of a data structure of an optical disk handled by the optical disk device according to the present invention;
FIG. 13 is another example of procedures in the case where the optical disk device according to one embodiment of the present invention makes communication with a server device S;
FIG. 14 is a block diagram depicting an example of a detailed configuration of the optical disk device according to one embodiment of the present invention;
FIG. 15 is a flow chart showing an example of processing for acquiring meta data in the optical disk device according to one embodiment of the present invention;
FIG. 16 is a flow chart showing an example of processing for decoding meta data from a server device in the optical disk device according to one embodiment of the present invention;
FIG. 17 is a flow chart showing an example of processing for acquiring meta data when reproduction is controlled from the server device in the optical disk device according to one embodiment of the present invention;
FIG. 18 is a flow chart showing an example of utilizing meta data from the server device in the optical disk device according to one embodiment of the present invention,
FIG. 19 is an illustrative view showing an example of a subtitle display in the optical disk device according to one embodiment of the present invention; and
FIG. 20 is an illustrative view illustrating another example of a display in the optical disk device according to one embodiment of the present invention.

Hereinafter, preferred embodiments of a reproducing apparatus and a reproducing method according to the present invention will be described in detail with reference to the accompanying drawings. The reproducing apparatus and reproducing method according to the present invention do not always require an optical disk. In the following embodiments, a detailed description will be given with reference to accompanying drawings by way of an example of a case of a reproducing apparatus handling an optical disk.

### <Reproducing apparatus>

### (Configuration)

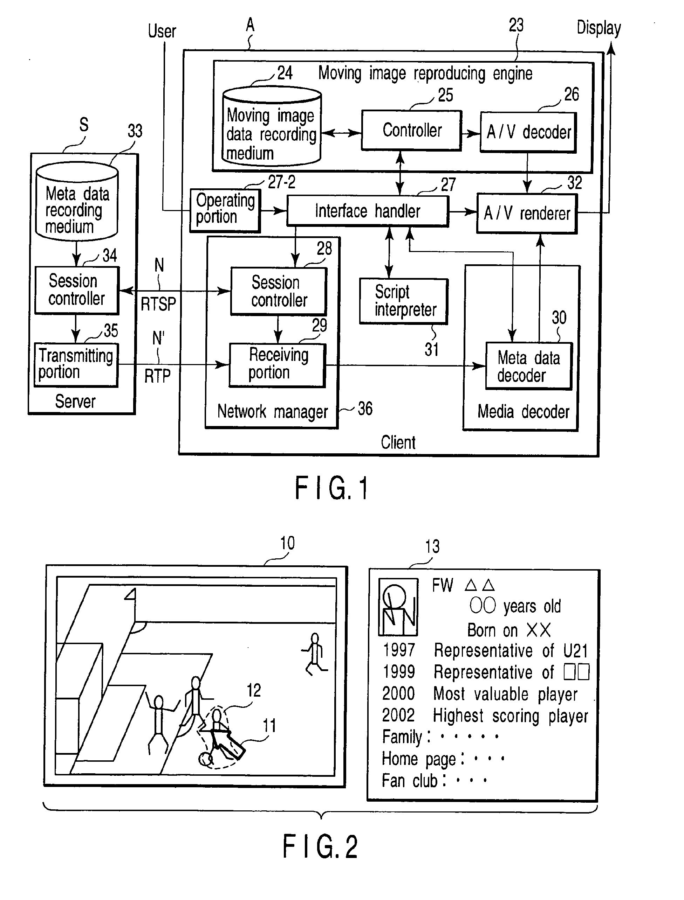

FIG. 1 is a block diagram depicting an example of a configuration of an optical disk according to the present invention. Referring to the drawing, the configuration of the optical disk device will be described below. In FIG. 1, there is shown an optical disk device A and a server device S connected to the optical disk device via a network N. In the drawing, a description will be given by way of an example of a case of which meta data which is extended information according to an object being one of the features of the present invention is not included in the optical disk device A, and the meta data is supplied from the server device S. This example is provided as a mere example, and another aspect is also possible.

As shown in FIG. 1, the optical disk device A comprises a moving image reproducing engine part 23 which includes a moving image data recording medium 24 in which image information or the like is recorded, an operating portion 27-2 which includes an operating panel and/or a remote control receiving portion not shown, an interface handler 27 connected to the operating portion, a network manager 36 connected to the interface handler, the network manager being connected to the server device S via a network N, and a media decoder 30 connected to the network manager 36, the media decoder including a meta data decoder 30 which reproduces meta data. In addition, the optical disk device A has an A/V renderer 32 connected to the interface handler 27, the A/V renderer outputting image information.

Further, the moving image reproducing engine 23 has a controller 25 connected to a moving image data storage medium 24, the controller controlling readout of data from the moving image data recording medium 24, and an A/V decoder 26 which carries out processing for decoding moving image data. Here, the moving image data recording medium 24 may be specifically any medium such as a DVD, a video CD, a video tape, a hard disk, or a semiconductor memory as long as it is capable of storing moving image information. Digital or analog moving image data is recorded in the moving image data recording medium 24.

Furthermore, the network manager 36 has a session controller 28 which exchanges control data with the server device S via the network N and a receiving portion 29 which receives meta data from the server device S via the network N.

A communication protocol with a high reliability is required for data transmission and receiving using the network N for use in communication of control data between the server device S and the optical disk device A. For example, a combination of RTSP (non-patent document 2), TCP, and IP is used. On the other hand, the network N' is used for transmitting the meta data stored in the server device to the optical disk device A. In this network N', fast data transmission is strongly required, and therefore, a combination of protocols RTP (non-patent document 3), UDP, and IP is used.

Further, as shown in FIG. 1, the server device S, has at least a meta data recording medium 33 which stores meta data, a session controller 34 which exchanges control information with the session controller 28 included in the network manager 36 of the optical disk device A, and a transmitting portion 35 which transmits meta data.

### (Basic operation)

A description will be given with respect to a reproducing process which is a basic operation of the optical disk device according to the present invention. A general reproducing process and a reproducing process carried out in synchronism with meta data which is a feature of the present invention can be selectively carried out.

First, the moving image data recording medium 24 is provided as a recording medium capable of recording image information, such as a DVD, a video CD, a video tape, a hard disk, or a semiconductor memory. The digital or analog image information stored in the moving image data recording medium 24 is read out under a control of a controller 25. That is, the read out image information is outputted to an A/V decoder 26 according to control such as a start and a stop of readout of the controller 25 or access to a desired location in image information or the like. The A/V decoder 26 carries out decode processing for the read out image information, thereby outputting the image information in a reproducible state to an A/V renderer 32. Although the image information used here is handled as those which includes a voice, reproduction can be made even in the case of only an image which does not include a voice. In the case where voice data is included in the image information, the A/V decoder 25 separates image and voice data from the moving image data. Then, each item of information is subjected to decode processing, and the decoded information is outputted to the A/V renderer 32. The A/V renderer 32 sends the image and voice information inputted from the A/V decoder 25 to a monitor (not shown). In the case where an image is inputted from the meta data decoder 30 as well as the A/V decoder 25, both images are combined with each other. The combined image is sent to the monitor, and depicted therein. In accordance with the above procedures, processing for reproducing image information is carried out in the case where no meta data is used by the optical disk device according to the present invention.

As a result, the meta data which is extended information according to the present invention can be selectively used. That is, the meta data may not be used in the case of reproducing image information or may be used in the case where additional information is reproduced to be displayable. Further, the meta data can be selectively used in the case where the data is stored in advance in a storage region such as a DVD which is a moving image data recording medium 24 or in the case where the data is supplied collectively or successively from the server device S or the like.

In the case where meta data is extracted from the moving image data recording medium 24, for example, the meta data extracted for example by the controller 25 is supplied to the interface handler 27. In addition, in the case where the meta data is acquired from the server device S via the network N, it is possible to supply the meta data per image information collectively, or in synchronism with reproduction of the image information accordingly.

That is, the optical disk device A maintains moving image data, and the meta data associated with the moving image data is recorded in the server device S. The server device S sends meta data to the optical disk device A via the network N upon a request from the optical disk device A. The optical disk device A processes the meta data sent in synchronism with reproduction of moving image data, and achieves an additional function other than moving image reproduction such as a hyper media.

That is, the meta data decoder 30 processes the meta data inputted from a receiving portion 29. First, the A/V decoder 25 decodes required meta data in synchronism with reproduction of image information, with reference to a time stamp of the moving image in reproduction. Then, in accordance with the display information included in meta data, image data required for displaying a mask image in an object region is produced, and the produced image data is outputted to an A/V renderer 31.

In addition, the meta data decoder judges which object has been specified for input information such as user's click inputted from the interface handler 27. Then, an operating instruction such as displaying associated information defined with respect to the specified object is retrieved, and the operating instruction is sent to a script interpreter 31 via the interface handler 27. In addition, unnecessary meta data is judged from a time stamp included in meta data and a time stamp of a moving image in reproduction, and the unnecessary meta data is erased from a memory.

Accordingly, the script interpreter 31 interprets and executes a script. The script to be executed in the case where an object is specified by a user is sent to the script interpreter from the meta data decoder 30 via the interface handler.

The A/V handler 32 sends the image or voice inputted from the A/V decoder 25 to a monitor (not shown). In the case where an image is inputted from the meta data decoder 30 as well as the A/V decoder 25, both images are combined with each other, then the combined image can be sent to a monitor or the like, although not shown, and can be depicted therein.

In this manner, as well as an image according to the reproduced image information, text information or URL (or a browser screen according thereto), associated with an object specified according to a user's operation (an image of one actor, for example, in an image of a cinema stored in a DVD) can be reproduced in the optical disk A. Acquisition and utilization of the meta data according to the present invention will be described in detail with reference to accompanying drawings.

### (Configuration of meta data)

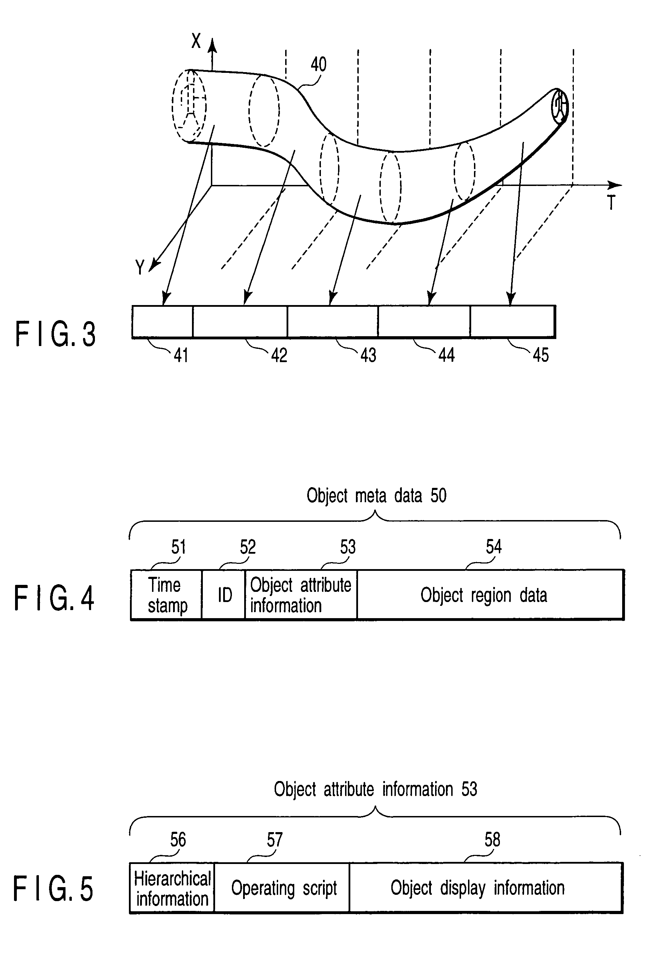

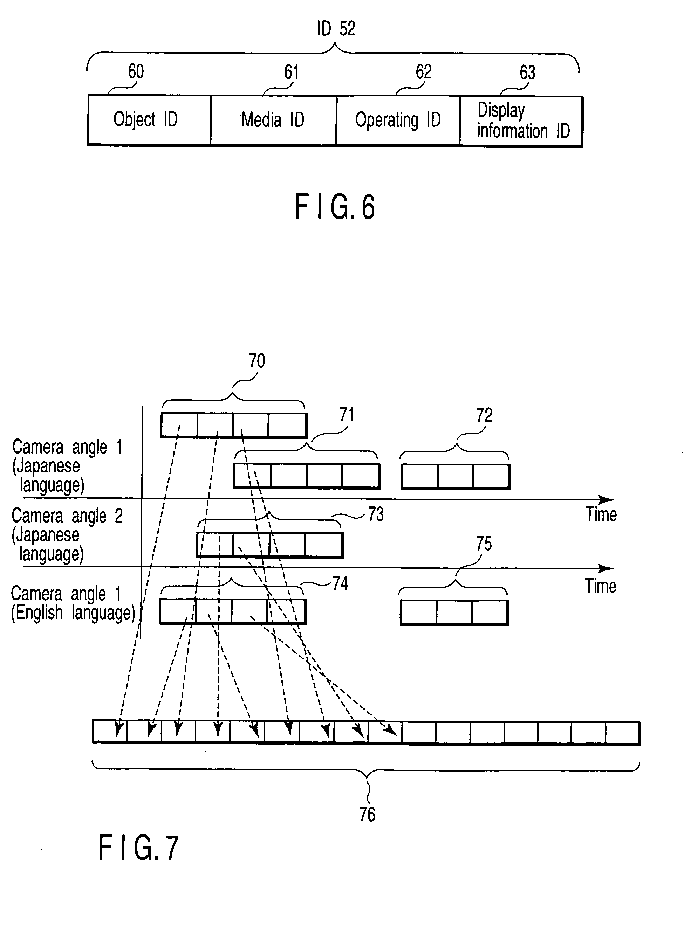

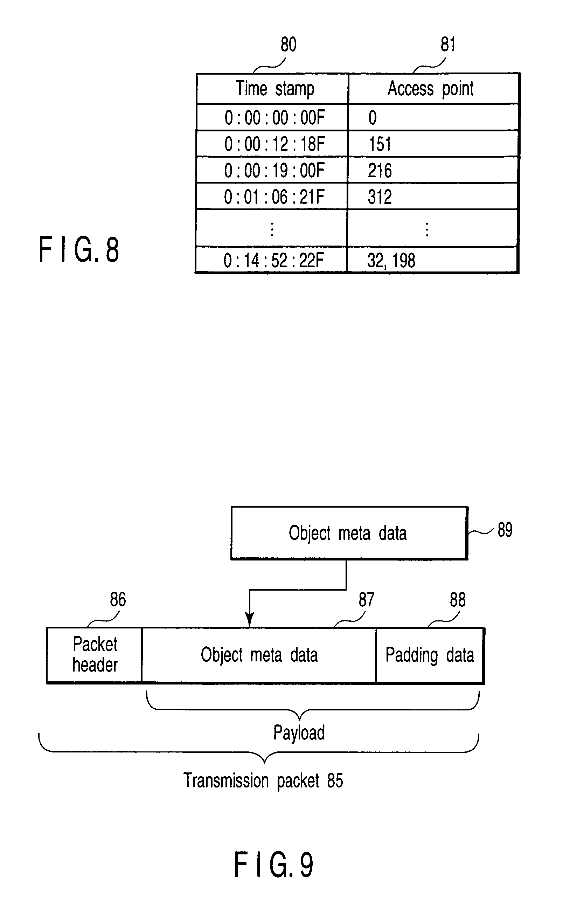

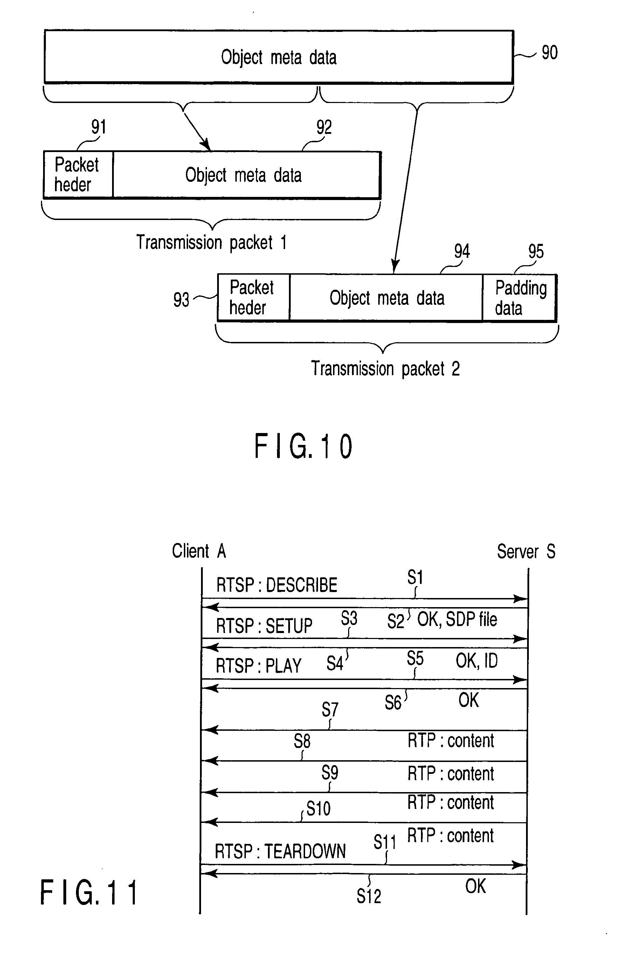

The meta data which is extended information will be described below in detail with reference to accompanying drawings. FIG. 3 is an illustrative view illustrating a structure of object region data used by an optical disk device according to the present invention. FIG. 4 is an illustrative view illustrating a data structure of a single unit of the meta data used by the optical disk device according to the present invention. FIG. 5 is an illustrative view showing a data structure of object attribute information possessed by the meta data used by the optical disk device according to the present invention. FIG. 6 is an illustrative view illustrating a data structure of ID information possessed by the meta data used by the optical disk device according to the present invention. FIG. 7 is an illustrative view illustrating a method for generating object meta data streams of which a meta data used by the optical disc device according to the present invention is arranged in order of time stamps. FIG. 8 is a view showing an example of an access point table for providing access at a high speed to a desired location in the object meta data streams in the optical disk device according to the present invention. FIG. 9 is a view showing an example of a method for configuring a transmission packet of the meta data in the optical disk device according to the present invention. FIG. 10 is a view showing another example of a method for configuring a transmission packet of the meta data in the optical disk device according to the present invention. FIG. 11 is a view showing an example of procedures in the case where the optical disk device according to the present invention makes communication with a server device.

The meta data used in the present embodiment includes: data concerning a region of an object such as a person or a material appeared in a moving image recorded in a moving image data recording medium 24, and data on a method for displaying object information in an optical disk device A and an operation to be made by the optical disk device A when a user specifies these objects. A structure of the meta data and constituent elements thereof are as follows.

A description will be given with respect to object region data which is data concerning a region of an object such as a person or a material appeared in a moving image. FIG. 3 is a view illustrating a structure of object region data. In the drawing, a trajectory 40 depicted by a region of one object is expressed on a three-dimensional coordinate system consisting of X (a coordinate value in a vertical direction of an image), Y (a coordinate value in a horizontal direction of an image), and T (time of an image). The object region is converted into object region data per predetermined time interval (for example, 0.5 second to 1.0 second). In FIG. 3, one object region 40 is converted into five object region data 41 to 45, and these items of object region data are stored in separate object meta data (described later). As the conversion method, there can be used, for example, an MPEG-4 shape encoding (non-patent document 1) and an MPEG-7 time space region descriptor or the like may be used. The MPEG-4 shape encoding or the MPEG-7 time space descriptor is a method for reducing a data volume by using a time based correlation of an object region. Thus, there is a problem that data cannot be decoded midway or peripheral time data cannot be decoded in the case where data on a certain time is missing. In contrast, as shown in FIG. 3, an object appeared in a moving image for a continuously long period of time is divided into a plurality of region data 41 to 45, then the divided objects are produced as data, whereby a random access can be easily provided, and an effect caused by the missing of partial data can be reduced.

FIG. 4 shows a single unit of meta data used in the present embodiment. In the drawing, the data is referred to as object meta data 50. The object meta data 50 includes object region data 54. With respect to the object region data 54, as described in FIG. 3, a trajectory in a continuous time interval in one object region is produced as data.

The object mete data 50 includes a time stamp 51. The time stamp 51 indicates which time of a moving image corresponds to an object region described in this object region data 54. As shown in FIG. 3, an object region covers a certain time region, therefore in general, a time at the beginning of the object region is described in the time stamp 51. Of course, a time interval of the object region described in the object region data or a time at the end of the object region may be described.

In addition, the object meta data 50 includes object attribute information 53. The object attribute information 53, as shown in FIG. 5, consists of object hierarchical information 56, an operating script 57, and object display information 58. The hierarchical information 56 used herein denotes information for determining a hierarchical relationship of object regions in the case where a plurality of objects exist at the same time. For example, assume that a value ranging from 0 to 255 is used as hierarchical information, and an object with a smaller value of hierarchical information exists on a more frontal side. By utilizing hierarchical information, even if the case where a plurality of object regions overlap on each other, when such an overlap portion has been specified, it becomes possible to judge which object has been specified.

In addition, the operating script 57 is provided as a script in which an operation made by an optical disk device A when an object has been specified is described. For example, instructions such as displaying an HTML file, jumping to another moving image or another scene of a moving image in reproduction, and executing an application or the like are described. In particular, in the case where a moving image is provided as DVD-video contents, the operations may include such as a change of moving image during reproduction to another angle, a change of display and voice language during reproduction to another language, and a change of the moving image to a menu. Object display information 58 is provided as information for specifying a display method associated with an object. For example, selectable display methods include: a method for explicitly indicating an object region by changing brightness of an object region and the other region, a method for simply surrounding the object region with a line, and a method for displaying a name of an object in the vicinity of the object region. The object display information 58 shows choices of the methods and parameters required for each method.

An ID 52 for identifying object attribute information 53 is shown here. FIG. 6 shows an example of configuration of the ID 52. With respect to an object ID 60, a separate ID is allocated for every object appeared in a moving image. If the same character or car is treated as separate objects in meaning, a separate ID can be allocated. A media ID 61 is provided as an ID for specifying which moving image this object meta data is used for. For example, a moving image reproduced by selecting a voice language or a camera angle and the like can be changed (for example, DVD multi-angle function). The media ID 61 is provided as an ID for determining in which voice language or at which camera angle, object meta data is used in the case where the moving image recorded in the moving image data recording medium 24 is such a moving image. An operating ID 62 is provided as an ID assigned to an operating script 57 included in object attribute information 53. In a similar way, display information ID 63 is provided as an ID assigned to object display information 58 included in object attribute information 53. All of these IDs 60 to 63 may not be always provided. For example, in the case where only one moving image is recorded in the moving image data recording medium 24, the media ID 61 is not required. In the case where an operating scrip and object display information always correspond to each other on one to one basis, either of them may be provided. In a similar way, in the case where an operating script or object display information is determined for each object, neither the operating ID 62 nor display ID 63 is required.

### (Transmitting and receiving meta data)

A description will be given with respect to transmission and receiving of meta data 50 in the case where the meta data is supplied from a server device S. It is desirable that the object meta data 50 is arranged and recorded in order of time stamps so as to be transmitted in the server device S. FIG. 7 is a view illustrating a method for generating meta data 50 of which the meta data 50 is arranged in order of time stamps. In the drawing, there are two camera angles, i.e., camera angle 1 and camera angle 2. It is assumed that, when the camera angle is changed in the optical disk device A, a moving image displayed therein is also changed. In addition, there are two selectable language modes, i.e., Japanese language mode and English language mode. It is assumed that separate object meta data is provided for respective languages.

FIG. 7 shows a camera angle 1 and object meta data 70 to 72 for the Japanese language, and a camera angle 2 and object meta data 73 for the Japanese language. In addition, object meta data 74 and 75 for the English language are shown. Each of the object meta data 70 to 75 corresponds to one object in the respective moving images. As described in FIG. 3, a plurality of object meta data 70 to 75 are configured (one rectangle represents one item of object meta data). The horizontal axis in the drawing corresponds to a time in a moving image, and displays object meta data 70 to 75 in response to a time when an object appears.

An object meta data stream 76 is configured in response to these object meta data 70 to 75. The object meta data stream 76 is configured by simply arranging object meta data in order of time stamps.

The optical disk device A requires only the object meta data 70 to 75 which match settings of a camera angle or a voice language. For example, in the case where the camera angle is set to "2", only the meta data 73 is required, and the meta data 70 to 72 and meta data 74 and 75 are not required. Therefore, it is sufficient if the server device S receives setting of the optical disk device A, and then, transmits only required object meta data by selecting it from the object meta data stream. However, in the case where the setting of the optical disk device A is frequently changed, it is preferable that the object meta data included in all the object meta data streams is transmitted to the optical disk device A, and then, the optical disk device A selects required object meta data. In the case where moving images are reproduced from the beginning in the optical disk device A, and the object meta data corresponding to this moving image is subjected to streaming, the server device S may distribute the object meta data streams in ascending order. However, in the case where a random access occurs, it is necessary to distribute data in midway of the object meta data streams. At this time, an access point table is required in order to provide an access at a high speed in a desired location included in the object meta data streams. FIG. 8 is a view showing one aspect of an access point table. This table is made in advance, and is recorded in the server device S.

In FIG. 8, there is shown an arrangement 81 of access points corresponding to an arrangement 80 of time stamps of a moving image. Offset values are enumerated from the beginning of the object meta data streams corresponding to the time stamp 80 of the moving image. In the case where a value corresponding to a time stamp of a random access destination of a moving image does not exist in an access point table, an access point of a time stamp of a closer value is referred. Then, a transmission start place is searched with reference to the time stamp in the object meta data streams at the periphery of that access point. Alternatively, a time stamp of a time earlier than a time stamp of a random access destination of a moving image is searched from an access point table, and object meta data is transmitted from an access point corresponding to that time stamp.

When object meta data is transmitted from the server device S to the optical disk device A, the object meta data is packetized. A description will be given with respect to an example of a method for delivering object meta data into a transmission packet. FIG. 9 and FIG. 10 are drawings each illustrating a method for configuring a transmission packet in the case where the data size of object meta data is large or small. In FIG. 9, object meta data 89 is shown. The transmission packet consists of a packet header 86 and a payload. The packet header 86 includes a packet serial number, a transmission time, and specific information of a transmission source or the like. The payload is provided as a data region which stores transmission data. In the case where the object meta data 89 is included in the payload, the object meta data is stored in the payload without modification, and the remaining portion of the payload is padded with padding data 88. The padding data is provided as dummy data for adjusting a data size, and is provided as a series of values 0, for example. In the case where the payload size can be equalized to object meta data, no padding data is required.

On the other hand, FIG. 10 shows a method for configuring a transmission packet in the case where object meta data cannot be included in a payload. At first, object meta data 90 is stored in a payload at only a portion 92 which can be included in a payload of a first transmission packet. The remaining data 94 is stored in a payload of a second transmission packet. If a redundancy in the storage size of the payload exists, such a redundancy is padded with padding data 95. This method applies to that for dividing object meta data into two or more packets.

Here, a description will be given with respect to procedures for making communication between the optical disk device A and the server device S and operation of the respective devices. FIG. 11 is a timing chart showing procedures for making communication in the case where communication protocols of Real Time Streaming Protocol (RTSP) and Real Time Transport Protocol (RTP) are used. A network N is used for RTSP data transmission and receiving, and a network N' is used for RTP data transmission and receiving. First, when a user inputs reproduction of a moving image by using the optical disk device A, the optical disk device A requests the server device S to provide information concerning object meta data targeted for streaming (RTSP DESCRIBE method) (S1). The server device S sends information on object meta data to the optical disk device A in response to this request (S2). Specifically, information such as a session protocol version, a session owner, a session name, connection information, session time information, a meta data name, or a meta data attribute is sent to the optical disk device A. As a method for describing these items of information, for example, the Session Description Protocol (SDP) (non-patent document 5) is used.

Next, the optical disk device A requests the server device S to construct a session (RTSP SETUP method) (S3). The server device S is ready for streaming, and returns a session ID to the optical disk device A (S4). Then, the optical disk device A requests transmission of object meta data (RTSP PLAY method) (S5). This request includes information on a time stamp of a reproduce start location in a moving image. The server device S specifies a transmission start location in an object meta data stream, packetizes object meta data, and sends the packetized data to the optical disk device A in accordance with the RTP protocol (S6 to S10).

A receiving portion 29 of the optical disk device A takes out object meta data from a received packet, and sends the data to a meta data decoder 30. The meta data decoder 30 stores the meta data in a received buffer, and decodes the meta data from object meta data with its earlier time stamp. At this time, meta object data of which settings of a camera angle and a voice language do not coincide with each other referring to a media ID 61 is not decoded. When a predetermined volume of data is stored in the buffer, a controller 25 starts reproducing a moving image. The time stamps of moving images in reproduction are serially sent to the meta data decoder 30. In the meta data decoder, object meta data is decoded in synchronism with this time stamp. In the case where an object region is displayed based on object meta data, a mask image and a contour line or the like in an object region are generated. The generated image and contour line are sent to an A/V renderer in accordance with the time stamp of the moving image in reproduction. If old object meta data is not required, that data is erased.

In the case where a moving image is stopped in the optical disk device A or when an attempt is made to cancel object meta data transmission from the server device S, the optical disk device A requests the server device S to terminate a session (RTSP TEARDOWN method) (S11). The server device S having received this request cancels data transmission, terminates the session, and sends a confirmation message to the optical disk device A (S12). In accordance with this processing, the session ID which has been used in the session becomes invalidated.

A description will be given with respect to an operation of the optical disk device A in the case where a user clicks an object region by using an input device such as a mouse. When the user carries out clicking, a coordinate location clicked on a moving image is first inputted to an interface handler 27. The interface handler 27 sends a time stamp of a moving image produced at the moment of clicking to the meta data decoder 30. The meta data decoder 30 carries out processing for specifying which object has been instructed by the user from the time stamp and coordinate. The meta data decoder 30 decodes object meta data in synchronism with reproduction of a moving image. Therefore, an object region in a time stamp produced during clicking is generated so that this processing can be easily carried out. In the case where a plurality of object regions exist on the clicked coordinate, the most frontal object is specified with reference to hierarchical information 56.

When a user specified object is specified, the meta data decoder 30 sends an operating script 57 of that object to a script interpreter 31. The script interpreter 31 having received the operating script interprets and executes that script. For example, a specified HTML file is displayed or reproduction of a specified moving image is started. These HTML file or moving image data may be recorded in the optical disk device A, may be sent from the server device S via a network, or may exist over a network such as Internet.

As described above in detail with reference to accompanying drawings, a reproducing apparatus according to the present invention enables to provide a reproducing apparatus for, upon receipt of an instruction supplied to an object in an image of a disk, displaying object associated information, thereby making it easy to provide information by a user intuitive operation.

### <Optical disk and optical disk device>

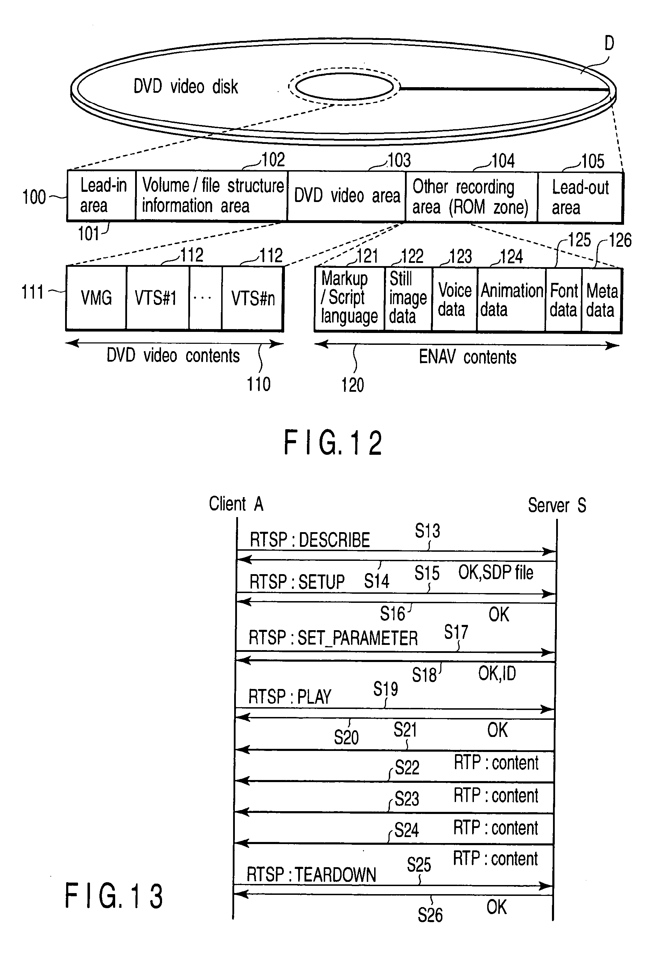

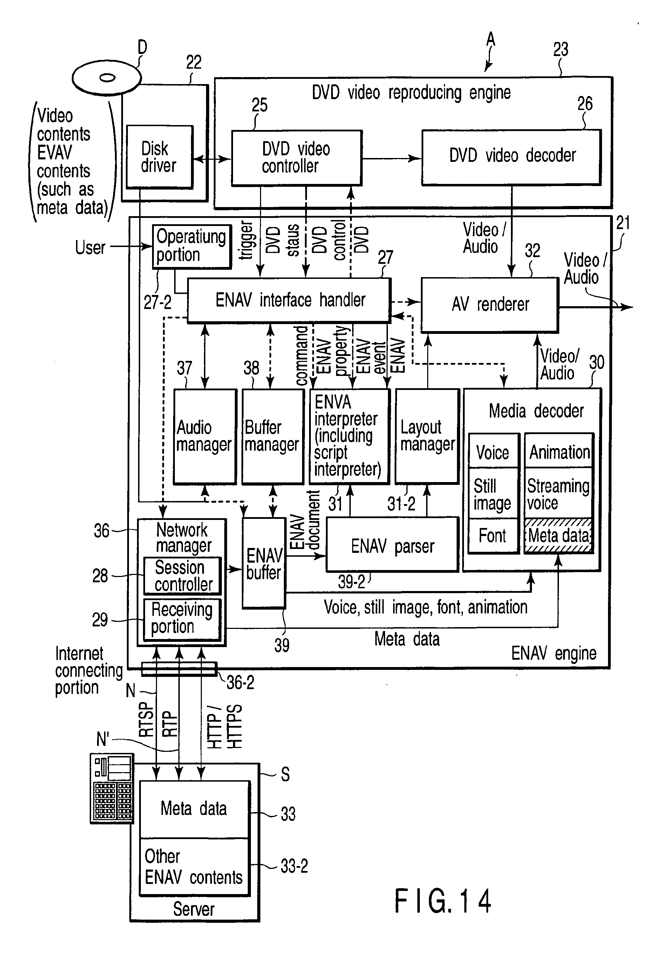

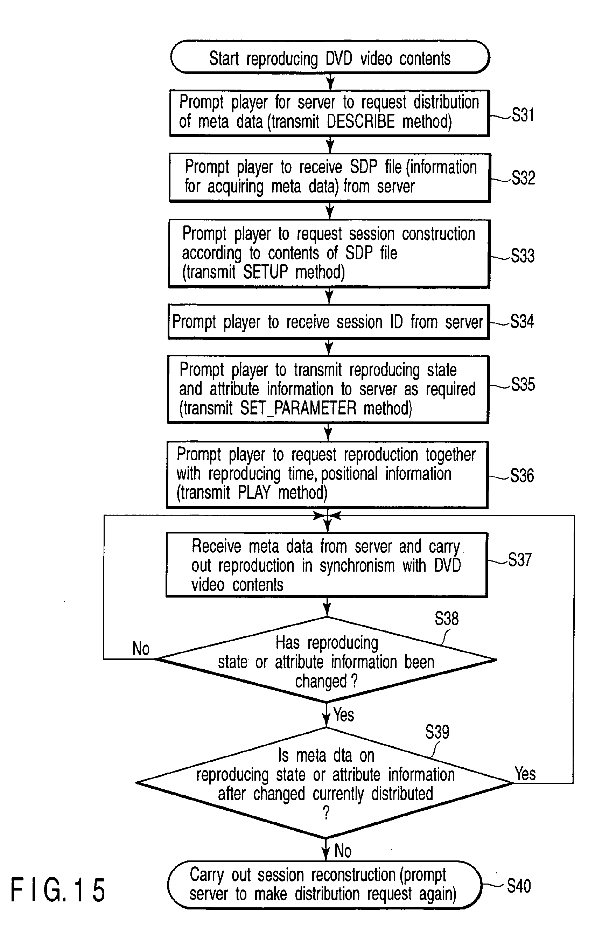

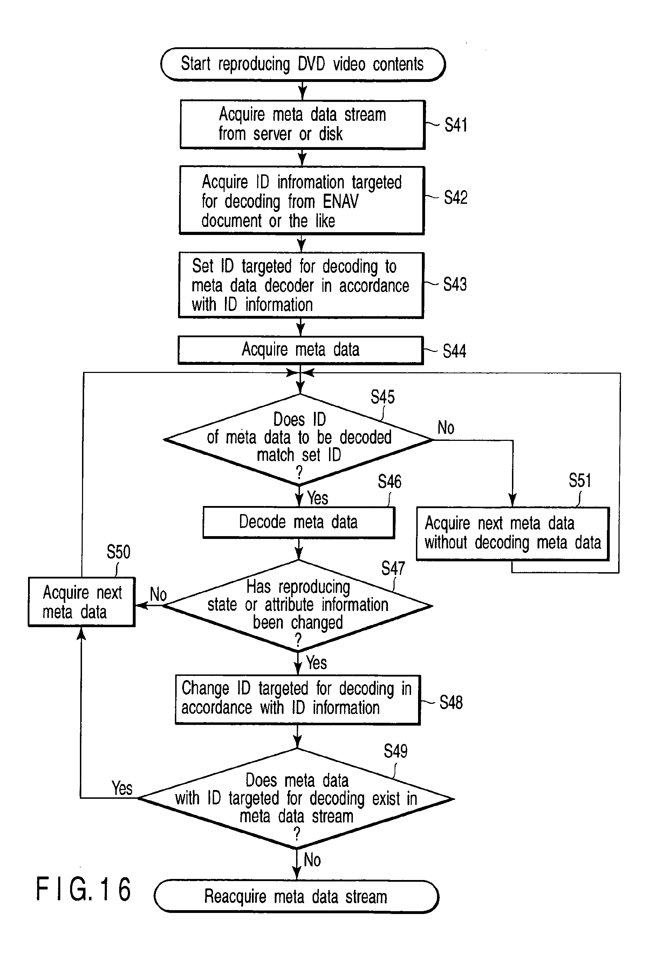

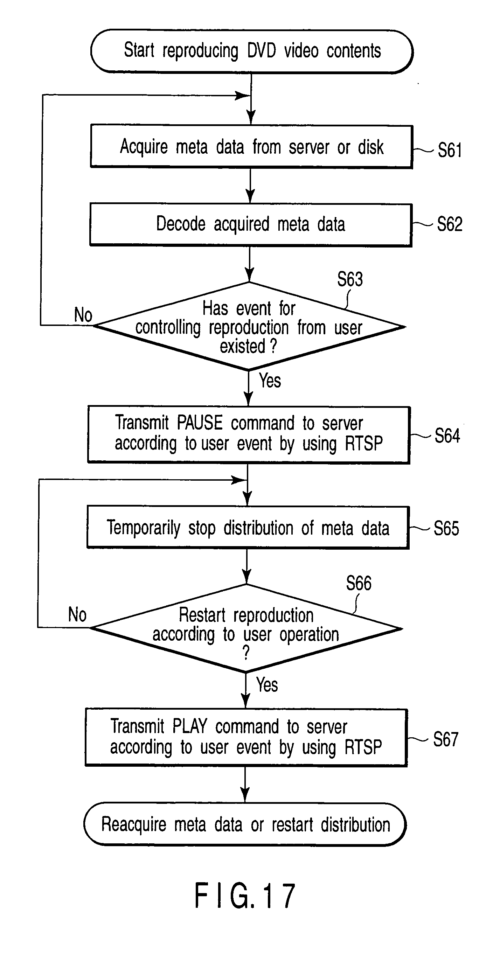

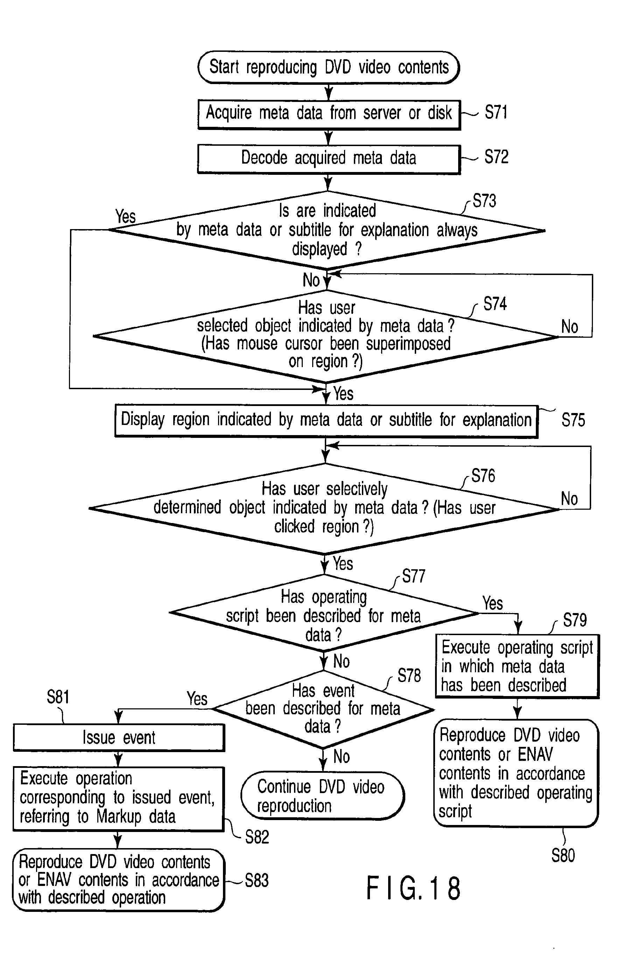

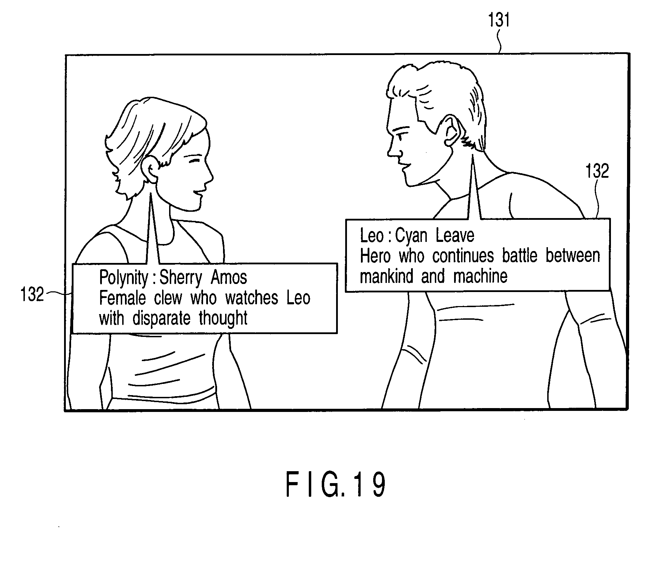

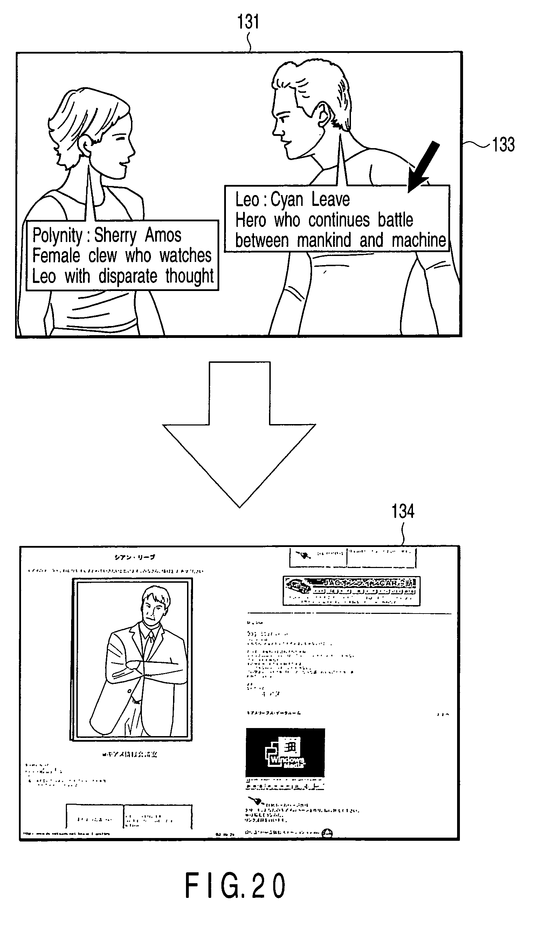

An operation of a reproducing apparatus according to the present invention will be described with reference to accompanying drawings by way of example of a case in which an optical disk device is used when an optical disk is a DVD. FIG. 12 is a drawing showing an example of a data structure of an optical disk handled by an optical disk device according to the present invention. FIG. 13 is another example of procedures in the case where the optical disk device according to the present invention makes communication with a server device S. FIG. 14 is a block diagram depicting an example of a detailed configuration of the optical disk device according to the present invention. FIG. 15 is a flow chart showing an example of processing for acquiring meta data in the optical disk device according to the present invention. FIG. 16 is a flow chart showing an example of processing for decoding meta data from a server device in the optical disk device according to the present invention. FIG. 17 is a flow chart showing an example of processing for acquiring meta data when reproduction is controlled from the server device in the optical disk device according to the present invention. FIG. 18 is a flow chart showing an example of utilizing meta data from the server device in the optical disk device according to the present invention. FIG. 19 is an illustrative view showing an example of a subtitle display in the optical disk device according to the present invention. FIG. 20 is an illustrative view illustrating another example of a display in the optical disk device according to the present invention.

### (DVD data structure)

In DVD video contents, unlike other moving image contents, it is possible to provide a menu, a multi-angle, a multi-language voice, a multi-language subtitle, and a plurality of titles or the like. Thus, a configuration of moving image contents is complicated in particular.

FIG. 12 shows an example of a DVD video disk D handled by the optical disk device A according to the present invention. In FIG. 12, this DVD video disk D stores DVD video contents (having an MPEG2 program stream structure) 110 in a DVD video area. This video disk records enhanced navigation (hereinafter, referred to as ENAV) contents capable of providing a variety of reproduction of video contents in other recording area (ROM zone) which is recognized its existence in the DVD video standard.

The contents of the DVD video area (in the one skilled in the art such as manufacturers of DVD video player) are conventionally known, however, the contents of the DVD video area will be briefly described here.

That is, a recording area 100 of a DVD video disk includes a lead-in area 101, a volume space, and a lead-out area 105 in order from its internal periphery. The volume space includes a volume/file structure information area 102 and a DVD video area (DVD video zone) 103. Further, the volume space can include another recording area (DVD other zone) 104 as an option.

The volume/file structure information area 102 is provided as an area allocated for a UDF (Universal Disk Format) bridge structure. A volume of the UDF bridge format can be recognized in accordance with Part 2 of ISO/IEC 13346. This volume recognition space consists of sequential sectors, and starts from a first logical sector of the volume space in FIG. 12. The first 16 logical sectors are reserved for using a system defined by an ISO 9660. A volume/file structure information area including the above contents is required in order to ensure compatibility with the existing DVD video standard.

The DVD video area 103 records extended information called a video manager VMG 111 and one or more video contents called video title sets VTS (VTS#1 to VTS#n) 112. The VMG 111 is provided extended information relevant to all the VTSs which exist in the DVD video area. Although not shown, this area includes control data VMGI, VMG menu data VMGM_VOBS (option), and VMG backup data. In addition, although not shown, each VTS 112 includes control data VTSI of that VTS, VTS menu data VTSM_VOBS (option), data VTSTT_VOBS indicating the contents (such as cinema) of that VTS (title), and VTSI backup data. A DVD video area including the above contents is required in order to ensure compatibility with the existing DVD video standard.

A reproduce selection menu or the like of each title (VTS#1 to VTS#n) is provided in advance by a provider (DVD video disk producer) using VMG 111. A reproduce chapter selection menu in a specific title (for example, VTS#1) and procedures for reproducing the recorded contents (cells) are provided in advance by a provider using VTSI. Therefore, a disk viewer (a DVD video player user) can enjoy the recorded contents of that disk 1 in accordance with the VMG/VTSI menu provided in advance by the provider and reproduce control information (program chain information PGCI) contained in VTSI. However, in the existing DVD video standard, the viewer (user) cannot reproduce contents (cinema or music) of the VTS 112 in accordance with a method which is different from the VMG/VTSI available from the provider.

A DVD video disk D including ENAV contents is provided for the purpose of reproducing contents (cinema or music) of VTS in a method which is different from the VMG/VTSI 110 available from the provider or making reproduce by adding the contents which are different from the VMG/VTSI available from the provider. Though the ENAV contents 120 included in this disk cannot be accessed by a DVD video player manufactured under the existing DVD video standard, the ENAV contents 120 can be accessed by the DVD video player shown in FIG. 14 and the reproduce contents of the video player are available.

The ENAV contents 120 are configured so as to include data such as voice, a still image, a font, an animation, a moving image, and meta data and information for controlling reproduction of these items of data (the information being described in a Markup, Script, or CSS language). The information for controlling this reproduction is described by using a method for reproducing the ENAV contents (composed of voice, a still image, a font, an animation, a moving image, or meta data and the like) and/or DVD video contents (a display method, reproduce procedures, reproduce change procedures, or selection of a target for reproduction and the like) by using the Markup language, Script language, and CSS language.

For example, as Markup languages, HTML (Hyper Text Markup Language) / XHTML (extensible Hyper Text Markup Language) and SMIL (Synchronized Multimedia Integration Language), and as a script language, ECMA (European Computer Manufacturers Association) Script or a script language such as JavaScript, and a CSS (Cascading Style Sheet) for describing a layout can be used in combination.

### (Optical disk device)

Here, with respect to the DVD video disk D including ENAV contents, the contents other than those in another recording area are in accordance with the existing DVD video standard. Thus, even if a existing DVD video player is used, the video contents recorded in the DVD video area can be reproduced. That is, the conventional disk is compatible with the DVD disk including the ENAV contents according to the present invention.

In addition, although the ENAV contents 120 stored in the DVD disk according to the present invention cannot be reproduced (or utilized) in the existing DVD video player, the ENAV contents can be reproduced in the optical disk device A for DVD reproduction according to the present invention. Therefore, a variety of video reproduction such as displaying object associated information, for example, can be made without being limited to the contents of the VTM/VTSI available from the provider, by using the optical disk device A for DVD reproduction according to the present invention.

FIG. 12 shows an example of a configuration of the optical disk device A according to the present invention. This optical device has a feature in that the ENAV contents are stored in a DVD, and these contents can be reproduced. However, the optical disk device A of FIG. 14 does not agree with that of FIG. 1. It becomes clearer that the optical disk device A of FIG. 14 reproduces the ENAV contents stored in the DVD.

Here, the configuration and features of the optical disk device A in FIG. 14 will be serially described in detail with reference to accompanying drawings. The optical disk device A for reproducing a DVD in FIG. 14 comprises a DVD video reproducing engine 23, an ENAV engine 21, a disk driver 22, and an operating portion 27-2. The DVD video reproducing engine 23 reproduces and processes an MPEG2 program stream (DVD video contents) recorded on a DVD disk. The ENAV engine 21 reproduces and processes ENAV contents (including meta data). The disk driver 22 reads out the DVD video contents and/or ENAV contents (including meta data) recorded in the DVD disk. The operating portion 27-2 transmits a user's player input (user operation and/or user manipulation) as a user trigger.

In addition, the ENAV engine 21 comprises an Internet connecting portion 36-2. The Internet connecting portion 36-2 functions as communication means for making connection with a communication line such as Internet. The ENAV engine 21 further includes an ENAV buffer portion 39, an ENAV parser 39-2:
a layout manager 31-2, an ENAV interpreter (including a script interpreter) 31, an ENAV interface handler 27, a media decoder 30, an AV renderer 32, a buffer manager 38, an audio manager 37, and a network manager 36.

In a block diagram depicted in FIG. 14, a DVD video controller 25, a DVD video decoder 26, an ENAV interface handler 27, an ENAV parser 39-2, an ENAV interpreter 31, a layout manager 31-2, a AV renderer 32, a media decoder 30, a buffer manager 38, an audio manager 37, and a network manager 36 or the like can be provided by a microcomputer (and/or a hardware logic) which functions as each block diagram by means of a built-in program (firmware) not shown. A work area used for executing this firmware can be obtained by using a semiconductor memory (and a hard disk if required), not shown in each block diagram.

The ENAV contents 120 used here denotes contents recorded in a ROM zone of a DVD video disk independent from DVD video contents or contents recorded in an external server, the contents being acquired via an Internet connecting portion of a DVD player if required. The ENAV contents 120 are composed of: Markup languages such as HTML, XHTML, and SMIL, Script languages such as ECMAScript, JavaScript, information for display such as CSS (Cascading Style Sheet) including display information, JPEG, GIF, or PNG, voice data (including streaming voice data) such as MPEG, Dolby AC-3, or DTS, font data such as animation or moving image data such as SVG, MacromediaFlash, AnimationGIF, MNG, or MPEG-4, and meta data such as MPEG-7 or the like. Here, the Markup language, Script language, and CSS are comprehensively called an ENV document.

The DVD video reproducing engine 23 is provided as a device for reproducing DVD video contents under the existing DVD video standard. This engine is configured to include a DVD video decoder 26 for decoding the DVD video contents read from a disk driver 22 and a DVD video controller 25 for controlling reproduction of the DVD video contents.

The DVD video decoder 26 has a function for decoding image data, voice data, and auxiliary image data under the existing DVD video standard, respectively, and outputting the decoded image data (data obtained by combining the image data and the auxiliary image data) and voice data, respectively. In this manner, the DVD video reproducing engine 23 has the same function as a general DVD video player reproducing engine manufactured under the existing DVD video standard. Namely, the optical disk device A shown in FIG. 14 can reproduce data such as an image or a voice having an MPEG2 program stream structure in the same manner as the existing DVD video player, thereby making it possible to reproduce the existing DVD video contents.

In addition, the DVD video controller 25 is configured so that reproduction of the DVD video contents can be controlled in response to a "DVD Control" signal outputted from the ENAV engine 21. For example, this applies to playTitle (title reproduction), playChapter (chapter reproduction), and menuCall (menu reproduction). In addition, the DVD video controller 25 can output a "DVD trigger" signal indicating a reproduce state of DVD video contents to the ENAV engine 21 when a specified event has occurred in the DVD video reproducing engine 23 during DVD video reproduction. For example, this applies to Chapter Event (occurs when a chapter changes) and TimeEvent (occurs every specified time). Further, the DVD video reproducing controller 12 can output a DVD status" signal indicating DVD video player's property information (such as a currently reproduced voice language, an auxiliary image subtitle language, a reproduce location, various time information, and contents of disk or the like) to the ENAV engine 21 upon a request from the ENAV engine 21.

The ENAV interface handler 27 receives a "User trigger" signal corresponding to a user operation (such as menu display, title reproduction, reproduce start, reproduce stop, and temporary stop of reproduction or the like) from the operating portion 27-2. Then, the ENAV interface handler 27 transmits an ENAV event corresponding to the received User trigger signal to the ENAV interpreter. An operation relevant to this ENAV event is described in an ENAV document. For example, a DVD control signal is allocated to the ENAV event, and the DVD video reproducing engine is controlled or the AV renderer 32 is controlled, thereby making it possible to output an image and/or a voice from the DVD video reproducing engine 23 and change an image and/or a voice output from the ENAV engine 21.

In addition, the ENAV interface handler 27 transmits or receives a "DVD Status" signal, a "DVD trigger" signal, and/or "a DVD control" signal to or from the DVD video controller 25, or alternatively, transmits or receives a "User trigger" signal to or from the operating portion 27-2. The ENAV handler 27 is further configured so as to transmit or receive an "ENAV event" signal, an "ENAV property" signal, an "ENAV command" or any other control signal to or from the ENAV interpreter 31.

The ENAV parser 39-2 schematically carries out syntactic analysis of an ENAV document indicating reproduce control information included in the ENAV contents 120 obtained from the DVD video disk or the ENAV contents obtained from the Internet or the like. The ENAV document is configured in a combination of the Markup languages such as HTML, XHTML, and SMIL and the Script languages such as ECMAScript and JavaScript. In the ENAV parser 39-2, the analyzed language module is interpreted at the ENAV interpreter 31 or a layout manager 31-2.

The ENAV interpreter 31 interprets the ECMAScript language module described above, and follows an instruction from this module. Namely, the ENAV interpreter 31 has a function for issuing an "ENAV command" signal for controlling each of the functions in the ENAV engine 21 to the ENAV interface handler 27 in response to an "ENAV event" signal sent from the ENAV interface handler 27 or an "ENAV property" signal read from the ENAV interface handler 27. At this time, the ENAV interpreter 31 issues the "ENAV command" signal to the DVD video reproducing engine 23 (in response to the ENAV event) at a timing specified by the ENAV document or issues a signal for controlling the media decoder 30, thereby making it possible to control the DVD video reproducing engine 23 or decode the ENAV media (voice, a still image, a text font, a moving image, an animation, or meta data).

The layout manager 31-2 interprets layout information on the ENAV document described above, and follows an instruction from the layout information. Namely, this layout manager outputs a signal for controlling a layout to the AV renderer 32. This signal includes information concerning size of screen of an image to be outputted and a location of the screen (information concerning a display time such as display start, end, and continue may be included), and information concerning a level of a voice to be outputted (information concerning an output time such as output start, end, and continue may be included). In addition, the display text information included in the ENAV document is sent to the media decoder 30, and is decoded and displayed by using desired font data.

A syntactic analysis of a Markup language or a Script language and a specific method for carrying out such analysis may be made by a technique which is similar to syntactic analysis and/or interpretation in a well-known technique such as HTML, XHTML, SMIL or ECMAScript, and JavaScript, for example (the hardware to be used is a microcomputer described at the beginning of the description of FIG. 14). However, it should be noted that a difference occurs because a control target differs from another with respect to commands or variables described in Script. In the ENAV document used for carrying out the present invention, there are used specific commands or variables associated with reproduction of the DVD video contents and/or ENAV contents 120. For example, commands for changing the reproduced DVD video contents 110 or ENAV contents 120 in response to a certain event are specific to the Markup language or Script language in the ENAV document.

Other examples of commands and variables specific to the Markup language and Script language in the ENAV document include commands and variables for changing the size of an image from the DVD video reproducing engine 23 and/or ENAV engine 21 and changing allocation of that image. A size change of an image is instructed by a command for instructing a size change and a variable for specifying a size after the change. When an allocation change of an image is instructed by a command for instructing a change of a display position and a variable for specifying a coordinate or the like after the change, and when a display target overlaps on a screen, a variable for specifying a hierarchical positional relationship of overlap is added. Alternatively, a voice level from the DVD video reproducing engine 23 and/or ENAV engine 21 is changed, and voice language to be used is selected. A change of a voice level is instructed by a command for instructing the change of the voice level and a variable for specifying the voice language to be used after the change. A selection of the voice language to be used is instructed by a command for instructing a change of the voice language to be used and variables for instructing kinds of languages after the change. Some commands and variables control a User trigger from the operating portion 27-2.

The media decoder 30 decodes data on the ENAV contents 120 such as voice, a still image (including a background image), a text font, a moving image and/or an animation, and meta data included in the ENAV contents 120. Namely, the media decoder 30 includes a voice decoder corresponding to a decoding target, a still image decoder, a font decoder, an animation decoder, a streaming voice decoder, and a meta data decoder 30. For example, the voice data included in the ENAV contents 120 encoded by MPEG, AC-3, or DTS, for example, is decoded by means of the voice decoder or stream voice decoder, and the decoded voice data is converted into non-compression voice data. In addition, the still image data or the background image data encoded by JPEG, GIF, or PNG is decoded by means of the still image decoder, then the decoded data is converted into non-compression image data. In a similar way, for example, the moving image and/or animation data encoded by, for example, MPEG2, MPEG4, MacromediaFlash, or SVG (Scalable Vector Graphics) are decoded by means of the moving image and/or animation decoder, and the decoded data is converted into non-compression moving image data. In addition, the text data included in the ENAV contents 120 is decoded by means of a text and/or font decoder using the font data (for example, OpenType format) included in the ENAV contents 120. The decoded data is converted into text image data which can be superimposed on a moving image or a still image. Further, with respect to the meta data included in the ENAV contents 120, the required meta data is decoded in synchronism with reproduction of a moving image by means of the meta data decoder, referring to a time stamp of a moving image, as described above. Then, image data required for a mask image or the like in an object region is produced in accordance with the display information included in meta data. These decoded voice data, image data, animation and/or moving image data, text image data, and image and/or voice data properly including image data made by the meta data described above are sent from the media decoder 30 to the AV renderer 32. In addition, these ENAV contents 120 are decoded in accordance with an instruction from the ENAV interface 27.

The AV renderer 32 has a function for controlling an image and/or a voice output. Specifically, the AV renderer 32 controls, for example, a display location of an image, a display size (a display timing or a display time may be included) and a voice volume (an output timing and an output time may be included) in response to a signal outputted from the layout manager 31-2. This AV renderer also carries out pixel conversion of that image according to type of a specified monitor and/or an image to be displayed. An image and/or a voice output targeted for control are provided as outputs from the DVD video reproducing engine 23 and the media decoder 30. Further, the AV renderer 32 has a function for controlling mixing or switching of the DVD video contents and ENAV contents 120 in accordance with a signal outputted from the ENAV interface handler 27.

The ENAV buffer portion 39 is composed of a buffer for storing the ENAV contents 120 downloaded from the server device S and for storing the ENAV contents 120 read from the DVD video disk by means of the disk driver 22.

The ENAV buffer portion 39 reads ENAV contents C22 in the server device S, and downloads the ENAV contents C22 via an Internet connecting portion 36-2 under the control of the buffer manager 38 based on the ENAV document (Markup language or Script language).

In addition, the ENAV buffer portion 39 reads the ENAV contents recorded in the DVD video disk under the control of the buffer manager 38 based on the ENAV document (Markup language or Script language). At this time, when the disk driver 22 can provide an access to the DVD disk at a high speed, the ENAV contents 120 can be read out from the DVD video disk at the same time while the DVD video contents are reproduced, namely, while the DVD video data is read out from the DVD video disk. In the case where the disk driver 22 cannot provide an access at a high speed or in the case where the disk driver 22 guarantees complete reproduce operation of the DVD video contents, it is necessary to cancel reproduction of the DVD video contents. In this case, before starting reproduction, the ENAV contents 120 are read out in advance from the DVD video disk and the read out contents are stored in an ENAV buffer. In this manner, the DVD video contents are read out from the DVD video disk, and at the same time, the ENAV contents 120 are read out from the ENAV buffer, thereby eliminating a burden on the disk driver 22. Therefore, it becomes possible to reproduce the DVD video contents and ENAV contents 120 at the same time without interrupting reproduction of the DVD video contents.

As described above, like the ENAV contents 120 stored in the DVD video disk, the ENAV contents downloaded from the server device S are also stored in the ENAV buffer portion 39, thereby making it possible to read out and reproduce the DVD video contents and ENAV contents at the same time.

In addition, a storage capacity of the ENAV buffer portion 39 is limited. Namely, the data size of the ENAV contents which can be stored in the ENAV buffer portion 39 is limited. Thus, it is possible to erase the ENAV contents with low necessity or store the ENAV contents with high necessity under the control of the buffer manager 38 (buffer control). The ENAV buffer portion 39 can automatically make the control for storage or the control for erasure described above.

Further, the buffer manager 38 instructs the ENAV buffer portion 39 to load the ENAV contents in accordance with loading information described in the ENAV document or a file indicated by the ENAV document. In addition, this buffer manager has a function for requesting that specific ENAV contents have been loaded on the ENAV buffer portion 39 (buffer control). When the specific ENAV contents have been completely loaded on the ENAV buffer portion 39, the ENAV buffer portion 39 notifies the completion of the load to the buffer manager 38. The buffer manager transmits the completion of the load to the ENAV interface handler 27 (end of preloading or trigger and end of loading or trigger).

The audio manager 37 has a function for instructing the ENAV buffer portion 39 to load update audio data (audio commentary data) from the DVD disk D of the disk driver 22 or the server device S (update control). In particular, this data is decoded by means of a streaming voice decoder of a media decoder, and the decoded data is outputted.

The network manager 36 controls an operation of the Internet connecting portion 36-2. Namely, when network connection or disconnection is instructed as an ENAV command by means of an ENAV document, the network manager 36 switches connection or disconnection of the Internet connecting portion 36-2.

A description will be given with respect to procedures for acquiring meta data contents from the server device S to the optical disk device A in synchronism with the DVD video contents, when reproduction of the DVD video contents is instructed. When distribution of meta data is requested to moving image contents, time information being currently reproduced or to be reproduced is sent from the optical disk device A to the server device S. The server device S needs to distribute meta data which corresponds to this time information. For example, reproduce location and/or time information includes VTSN indicating a domain number or a VideoTitleSet number, SPRM (4) indicating TTN for TT_DOM, SPRM (5) indicating VTS_TTN for TT_DOM, SPRM (6) indicating TT_PGCN for TT_DOM, SPRM (7) indicating PTTN, and PTS indicating a cell number and a reproduce time from the beginning of VOB.

However, as described above, the DVD video contents have a complicated structure as compared with other moving image contents. For example, the DVD video contents can configure a menu (such as a route menu, a voice menu, a subtitle menu, or an angle menu) independent from a title, and can synchronize another item of meta data with the respective menus. In addition, the DVD video contents can have a plurality of voices, a plurality of subtitles, and a plurality of angles in a title, and can synchronize another item of meta data with the respective elements. For example, if an angle is different from another, another moving image is reproduced, and thus, another item of meta data is required. When a voice in the English language is employed, mete data can be configured to be linked with the English contents. When a voice in the Japanese language is employed, meta data can be configured to be linked with the Japanese contents occurs. This also applies to the English subtitle and the Japanese subtitle. Apart from these elements, it is possible to synchronize another item of meta data with respective values by referring to a parental level set in the optical disk device A, a region code (SPRM20) set in a player, or a general parameter code (GPRM) set by contents producer.

When synchronous distribution of meta data streams is requested to DVD video contents, it is necessary to notify the state or attribute of the DVD video contents to be reproduced (or being reproduced) to the server device S. In addition, it is necessary for the server device S to send the meta data streams synchronized with this information. These state and/or attribute information include SPRM (3) representing a domain number and an angle number (ANGLN), SPRM (1) representing a voice stream number, SPRM (2) representing a subtitle stream number, SPRM (13) representing a parental level, SPRM (0) representing a menu description language code, SPRM (12) representing a nation code, SPRM (14) and SPRM (15) indicating a player configuration (a type of a TV monitor connected to the player can be acquired by using SPRM (14)), SPRM (20) representing the player's region code, and a general parameter (GPRM) or the like.

There are several methods for sending DVD video state and/or attribute information and reproduce location and/or time information from the optical disk device A described above to the server device S, as described below.

### (Transfer method)

(1) A first method for sending DVD video reproduce state and/or attribute information includes a SET_PARAMETER method using a Real Time Streaming Protocol (RTSP) as shown in FIG. 13. First, when a user instructs reproduction of a moving image (DVD video contents) in the optical disk device A (a DVD player), the optical disk device A requests the server device S to provide information concerning object meta data targeted for streaming, in accordance with description of an ENAV document (RTSP DESCRIBE method) (S13). The server device S sends information on object meta data to the optical disk device A in response to this request (S14). Specifically, information such as a session protocol version, a session owner, a session name, connection information, session time information, a meta data name, and a meta data attribute is sent to the optical disk device A. As a method for describing these items of information, for example, the Session Description Protocol (SDP) (non-patent document 5) is used. Next, the optical disk device A requests the server device S to construct a session (RTSP SETUP method) (S15). The server device S is ready for streaming, and returns a session ID to the optical disk device A (S16). Next, the optical disk device A transmits DVD video reproduce state and/or attribute information by using an RTSP SET_PARAMETER method (S17). For example, a specific example of a transfer signal is given below.
   C → S : SET_PARAMETER rtsp://example.com/metadata RTSP/1.0
   CSeq: 421
   Content-length: XX
   Content-type: text/parameters
   angle_num: X
   audio_num: X
   subpic_num: X
   parental_lv: X
   parental_lv: X
   region code: X
   gprm: XXXXXX
   (where specific numeric values are entered for X fields, respectively.
   S → C: RTSP/1.0 200 OK
   Cseq: 421
   As shown above, the values of an angle number, a voice number, a subtitle number, a parental level, a region code, and a general parameter are sent, respectively, from the top. At this time, the voice number, the subtitle number, the parental level, and the region code or the like may be sent as "sprm" (system parameter) in a lump. In addition, in the case where only one angle exists, for example, there is no need for sending a value of an angle_num parameter from the optical disk device A. Even if the parameter value is sent from the optical disk device A to the server device S, the server device S may ignore this value if there is no need for sending the value or if corresponding meta data is not prepared in the server device S.
   The optical disk device A then requests transmission of object meta data (RTSP PLAY method). This request includes information on a time stamp of a reproduce start position of a moving image. For example, a specific example of a transfer signal is given below.
   C → S PLAY rtsp://example.com/metadata RTSP/1.0
   CSeq: 835
   Session: 12345678
   Range: npt=XX-YY
   dvd=VTSN, ANGLN, TTN, VTS_TTN, TT_PGCN, PTTN, CELLN, PTS
   (Appropriate values are entered for VTSN, ANGLN, TTN, VTS_TTS, TT_PGCN, PTTN, CELLN, and PTS, respectively.)
   S → C: RTSP/1.0 200 OK
   CSeq: 835

   As shown above, a VideoTitleSet number, an angle number, a TT_DOM TT number, a TT_DOM VTS_TT number, a TT_DOM TT_PGC number, a One_Sequential_PGC_Title PTT number, a cell number, and a PTS value (reproduce time from the beginning of VOB) are specified as DVD parameters, respectively, from the left. The server device S specifies a transmission start location in an object meta data stream, packetizes object meta data, and sends the packetized meta data to the optical disk device A in accordance with an RTP protocol.
   Here, for example, angle numbers are specified in the SET_PARAMETR method and PLAY method as well. The former is valid in the case where a meta data file exists for each angle number. The latter is valid in the case where one meta data file is configured for all the angles.
(2) A second method for sending a DVD video reproduce state and/or attribute information includes a method for describing a URI (Uniform Resource Identifier) in which meta data exists when an SDP file is transmitted using Real Time Streaming Protocol (RTSP).
   As shown in FIG. 11, when a user instructs reproduction of a moving image (DVD video contents) by the optical disk device (DVD player), the optical disk device A requests the server device S to provide information concerning object meta data targeted for streaming in accordance with description of an ENAV document (RTSP DESCRIBE method) (S1). The server device S sends information on object meta data to the optical disk device A in response to this request (S2). Specifically, information such as a session protocol version, a session owner, a session name, connection information, session time information, a meta data name, and a meta data attribute is sent to the optical disk device A. As a method for describing these items of information, for example, the Session Description Protocol (SDP) (non-patent document 5) is used.
   At this time, a respective one of the connection destinations according to the DVD attribute information is described in the SDP file. For example, a specific example of a transfer signal is given below.
   uri: ang (1) =http://example.com/metadata/meta1
   uri: ang (2): subpic (0)
   =http://example.com/metadata/meta2
   uri: ang (2): subpic (1)
   =http://example.com/metadata/meta3
   uri: audio (0) =http://example.com/metadata/meta4
   uri: parental (1)
   =http://example.com/metadata/meta1
   uri: region (2) =http://example.com/metadata/meta5 (wherein ang (1) indicates angle number 1, ang (2) indicates angle number 2, subpic (0) indicates subtitle number 0, subpic (1) indicates subtitle number 1, audio (0) indicates audio number 0, parental (1) indicates parental level 1, and region (2) indicates region code 2, respectively)
      As shown above, the respective connection destinations for acquiring meta data according to the values of the angle number, the voice number, the subtitle number, the parental level, the general parameter, and the region code or the like are sent as an SDP file.
      The optical disk device A then requests the server device S in which required meta data exists to construct a session according to the current reproduce state and/or attribute information with reference to the SDP file )RTSP SETUP method) (S3). The server device S is ready for streaming, and returns a session ID to the optical disk device A (S4).
      The optical disk device A then requests transmission of object meta data (RTSP PLAY method). This request includes information on a time stamp of a reproduce start location of a moving image. For example, a specific example of a transfer signal is given below.
   C → S: PLAY rtsp://example.com/metadata RTSP/1.0
   CSeq: 835
   Session: 12345678
   Range: npt=XX-YY
   dvd=VTSN, ANGLN, TTN, VTS, TTN, TT_PGCN, PTTN, CELLN, PTS
   (Appropriate values are entered for VTSN, ANGLN, TTN, VTS_TTS, TT_PGCN, PTTN, CELLN, and PTS, respectively.)
   S → C: RTSP/1.0 200 OK
   CSeq 835
   As shown above, a VideoTitleSet number, an angle number, a TT_DOM TT number, a TT_DOM VTS_TT number, TT_DOM TT_PGC number, a One_Sequentil_PGC_Title PTT number, a cell number, and a PTS value (reproduce time from the beginning of VOB) are specified as the DVD parameters from the left. The server device S specifies a transmission start location in an object meta data stream, packetizes object meta data, and sends the packetized data to the optical disk device A by the RTP protocol.
   For example, angle numbers are specified in the SET_PARAMETR method and PLAY method as well. The former is valid in the case where a meta data file exists for each angle number. The latter is valid in the case where one meta data file is configured for all the angles.
(3) A third method for sending a DVD video reproduce state and/or attribute information includes a method for describing the respective meta data link destinations in a Markup language or a Script language (an ENAV document).

As shown in FIG. 11, when a user instructs reproduction of a moving image (DVD video contents) in the optical disk device (a DVD player), the optical disk device A requests the server device S to provide information concerning object meta data targeted for streaming, in accordance with description of the ENAV document (RTSP DESCRIBE method) (S1).

At this time, a specific example of a transfer signal is described below in the ENAV document.

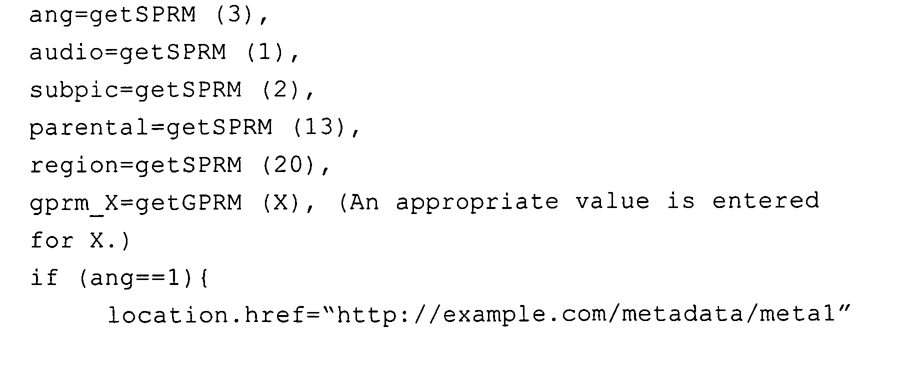

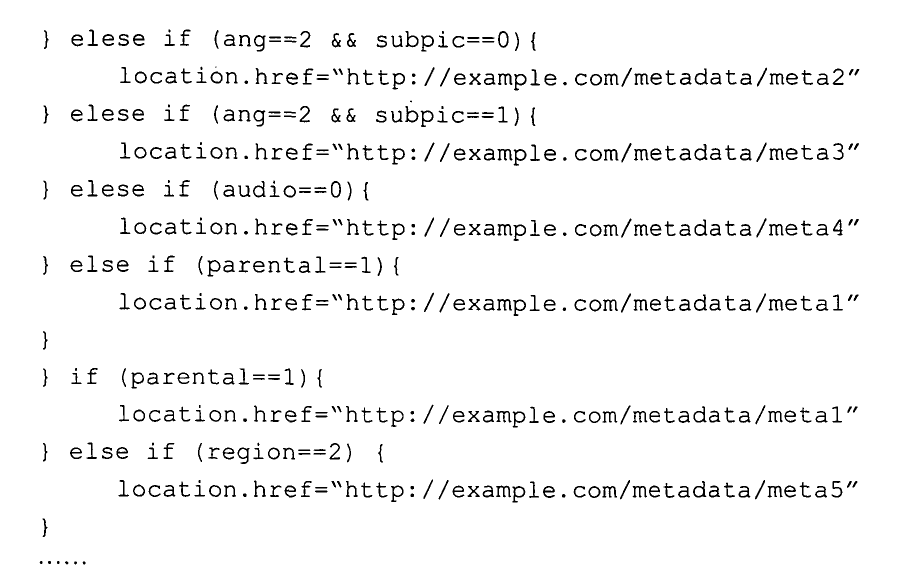

First, the values of an angle number, a voice number, a subtitle number, a parental level, a region code, and a general parameter set in the current optical disk device A are acquired in accordance with a getSPRM method and a getGPRM command. The value of general parameter is acquired for the ENAV document. A URI corresponding to each value is described in the ENAV document in a conditional branch manner, and the optical disk device A is connected to the URL which meets a condition.

The server device S sends information on object meta data to the optical disk device A in response to this connection. Specifically, information such as a session protocol version, a session owner, a session name, connection information, session time information, a meta data name, and a meta data attribute, is sent to the optical disk device A. As a method for describing these items of information, for example, the Session Description Protocol (SDP) (non-patent document 5) is used. Next, the optical disk device A requests the server device S to construct a session (RTSP SETUP method) (S3). The server device S is read for streaming, and returns a session ID to the optical disk device A (S4).

The optical disk device then request transmission of object meta data (RTSP PLAY method) (S5).
This request includes information on a time stamp of a reproduce start location of a moving image.
For example, a specific example of a transfer signal is given below.
C → S: PLAY rtsp://example.com/metadata RTSP/1.0
CSeq: 835
Session: 12345678
Range: npt=XX-YY
dvd=VTSN, ANGLN, TTN, VTS_TTN, TT_PGCN, PTTN, CELLN, PTS
(Appropriate values are entered for VTSN, ANGLN, TTN, VTS_TTN, TT_PGCN, PTTN, CELLN, and PTS, respectively.)
S → C: RTSP/1.0 200 OK
CSeq: 835

As shown above, a VideoTitleSet number, an angle number, a TT_DOM TT number, a TT_DOM VTS_TT number, a TT_DOM TT_PGC number, a One_Sequential_PGC_Title PTT number, a cell number, and a PTS value (reproduce time from the beginning of VOB) are specified as DVD parameters, respectively, from the left. The server device S specifies a transmission start location in an object meta data stream, packetizes object meta data, and sends the packetized meta data to the optical disk device A in accordance with an RTP protocol (S7 to S10).

For example, angle numbers are specified in the SET_PARAMETR method and PLAY method as well. The former is valid in the case where a meta data file exists for each angle number. The latter is valid in the case where one meta data file is configured for all the angles.

In addition, the parameters transmitted by using the above RTSP can also be transmitted by using HTTP.

In accordance with the above method, the optical disk device A sends the DVD video reproduce state, attribute information, and reproduce time information described to the server device S, thereby making it possible for the DVD player to receive the meta data stream corresponding to the contents to be reproduced (or being reproduced) from the server. Namely, regardless of a reproduce place or a state, it is possible to synchronize and reproduce meta data midway of a cinema, for example. In addition, whatever the voice and subtitle in the English or Japanese language may be, it is possible to distribute meta data consisting of the corresponding English contents or meta data consisting of the Japanese contents.

In the above mentioned example, there has been shown an example of a method for making synchronization with meta data when DVD video contents start reproduction. However, in the method similar to the above mentioned method, the changed DVD video reproduce state and/or attribute information is transmitted to the server, making it possible for the server to transmit a new meta data stream to the DVD player in the case where the DVD video reproduce state and/or attribute information has been changed during reproduction of the DVD video contents, for example, in one of the cases where:
- a voice has been changed,
- a subtitle has been changed,
- a monitor display has been changed,
- a reproduction has been made after stopping reproduction, and
- processing has skipped to a specific place.

### <Processing operation>

Here, the processing operation will be described in more detail with reference to a flow chart. FIG. 15 is a flow chart showing an operation for acquiring and updated meta data from a server. FIG. 16 is a flow chart showing processing for decoding the acquired meta data. FIG. 17 is a flow chart showing processing for updating meta data in the case where control of reproduce processing such as fast feed, fast rewind, or skip occurs. FIG. 18 is a flow chart showing utilization of the acquired meta data.

### (Updating meta data)

FIG. 15 is a flow chart showing procedures for the optical disk device A according to the present invention to acquire meta data from the server device S. In FIG. 15, first, the optical disk device A requests the server device S to distribute meta data (S31). Specifically, a DESCRIBE command or the like is transmitted. Next, the optical disk device A receives an SDP file (meta data information) from the server device S (S32).

Further, the optical disk device A requests the server device S to construct a session according to the contents of the SDP file (S33). Specifically, a SETUP command is transmitted. Next, the optical disk device A receives a session ID from the server device S (S34). The optical disk device A transmits reproduce state and/or attribute information to the server device S as required (S35). Specifically, a SET_PARAMETER method is transmitted. The optical disk device A requests the server device S to reproduce a reproduce time and position information together (S36). Specifically a PLAY method is transmitted.

In this manner, the optical disk device A properly reproduces meta data in synchronism with reproduction of DVD video contents while receiving meta data from the server device S (S37). In addition, it is monitored whether the reproduce state and/or attribute information has been changed, or not. If any change occur, it is checked whether meta data on the reproduce state and/or attribute information after changed is currently distributed, or not (S39). Then, the current processing reverts to the step S37 in which meta data is repeatedly received (S38). If meta data on the reproduce state and/or attribute information after changed is not currently distributed, session reconstruction is carried out (S40).

In accordance with the procedures, the optical disk device A reproduces image information contained in a disk or the like and meta data while reproducing image information contained in a disk or the like and while properly updating meta data from the server device S.

### (Decoding meta data)

FIG. 16 is a flow chart showing an operation for the optical disk device A (a DVD player) to discriminate meta data targeted for decoding from meta data is not targeted for decoding, referring to a stream ID.

In the flow chart of FIG. 16, when processing for reproducing DVD video contents starts, the optical disk device A acquires a meta data stream from the server device S or a disk (S41). When ID information targeted for decoding is acquired from an ENAV document or the like, an ENAV interface handler 27 sets an ID targeted for decoding to a meta data decoder 30 based on the ID information in accordance with an instruction of the ENAV document (Markup language or Script language) (S43). Then, meta data is acquired (S44), and it is judged whether or not the ID of meta data targeted for decoding matches a set ID (S45). When the ID matches with the set ID, decoding of the meta data is carried out (S46). Then, it is detected whether or not a change of the reproduce state and/or attribute information occurs. If no change occurs, the next meta data is acquired, and the current processing reverts to the step S45 then processing is continued (S50).

At this time, for example, in the case where the reproduce state and/or attribute information has been changed in accordance with a user instruction (S47), specifically in the case where:
- an angle number has been changed by the user pressing a button for changing an angle,
- a voice stream number has been changed by the user pressing a button for changing a voice, or
- a subtitle stream number has been changed by the user pressing a button for changing a subtitle or the like,
the ENAV interface handler 27 changes an ID of meta data to be decoded, the meta data ID being set to the meta data decoder 30 as required in accordance with the ENAV document (S48). In this manner, meta data to be decoded is changed, and meta data matching the changed reproduce state and/or attribute information is decoded. Namely, the meta data stream is composed of meta data which corresponds to a plural items of reproduce state and/or attribute information, whereby, even if the user has changed an angle, a voice, or a subtitle, it is possible to change meta data to be decoded in a real time.

In the case where meta data to be decoded is not included in the currently distributed meta data stream (S49), the DVD player makes connection to the server again, and requests distribution of such a meta data stream which includes meta data to be decoded.

If no ID matches in the step S45, the next meta data is acquired without decoding meta data (S51). In this manner, processing for decoding meta data is properly carried out.

### (Updating meta data)

FIG. 17 is a flow chart showing procedures for which distribution is stopped or distribution of new meta data stream is requested by meta data distributed from a server and an optical disk device A (a DVD player) according to user's operation.

In the flow chart of FIG. 17, when processing for reproducing DVD video contents is started, the optical disk device A acquires a meta data stream from the server device S or a disk D (S61). Then, the ENAV interface handler 27 serially decodes targeted meta data in accordance with an instruction of the ENAV document (Markup language or Scrip language) (S62).

Here, in the optical disk device A, in the case where reproduce state and/or attribute information has been changed in accordance with a user instruction, for example, specifically in the case where:
- DVD video reproduction has been interrupted by the user pressing a stop and/or pause button or the like,
- Special DVD video reproduction has started by the user pressing a fast feed and/or fast rewind button, or
- a DVD video reproduce portion has been changed by the user pressing a skip button, reproduction of the DVD video contents and reproduction of meta data cannot be well synchronized with each other, thus requiring a function for resynchronization. Therefore, it is judged whether such an event for controlling reproduction from the user, or not(S63), and a PAUSE command is transferred to the server device S by using RTSP according to the user event (S64).

For example, in the case where the user has pressed a STOP button or a PAUSE button, the optical disk device A sends a PAUSE method by using RTSP in order to stop distribution of a meta data stream (S65). For example, communication is made in accordance with a specific example of a transfer signal given below.
C → S: PAUSE rtsp://example.com/metadata RTSP/1.0
CSeq: 834
Session: 12345678
S → C: RTSP/1.0 200 OK
CSeq: 834

At this time, decoding of the meta data distributed from the meta data decoder 30 may be stopped instead of stopping distribution of the meta data stream.

In the case where the user has pressed a PLAY button or a PAUSE button has been pressed in order to restart reproduction (S66), the optical disk device A sends a PLAY method which includes positional information for starting reproduction by using RTSP in order to restart distribution of a meta data stream (S67). For example, communication is made in accordance with a specific example of a transfer signal.
C → S: PLAY rtsp://example.com.metadata RTSP/1.0
CSeq: 835
Session: 12345678
Range: npt=XX-YY
dvd=VTSN, ANGLN, TTN, VTS_TTN, TT_PGCN, PTTN, CELLN, PTS
(Appropriate values are entered for VTSN, ANGLN, TTN, VTS_TTN, TT_PGCN, PTTN, CELLN, and PTS, respectively.)
S → C: RTSP/1.0 200 OK
CSeq: 895

For example, in the case where the user has pressed the fast feed button or the fast rewind button, the optical disk device A sends the PAUSE method described above by using RTSP in order to stop distribution of a meta data stream while carrying out specific reproduction of the DVD video contents. At this time, decoding of the meta data distributed from the meta data decoder 30 may be stopped instead of stopping distribution of the meta data stream. In the case where the user has pressed the PLAY button in order to restart the reproduction described above, the DVD player sends the PLAY method which includes positional information for starting the reproduction described above by using RTSP in order to restart distribution of a meta data stream.

For example, in the case where the user has pressed the skip button, the DVD player starts reproduction of the DVD video contents at the user specified position. At this time, the DVD player sends the PLAY method which includes positional information for starting the reproduction described above by using RTSP in order to make distribution of the meta data stream synchronized with a position for carrying out reproduction.

In accordance with the procedures, in the optical disk device A, for example, the handling of meta data in the case where the reproduce state and/or attribute information has been changed is carried out based on the user instruction.

### (Utilizing meta data)

Lastly, a description will be given with respect to procedures for the optical disk device A (a DVD player) according to the present invention to decode the acquired meta data and carry out display processing with respect to an object, i.e., procedures for newly reproducing another item included in the same DVD contents or reproducing ENAV contents according to the user's operation.

In the flow chart of FIG. 18, when processing for reproducing DVD video contents is started according to the user operation or the like, the disk device A acquires a meta data stream from the server device S or a disk D (S71). Then, in accordance with an instruction of the ENAV document (Markup language or Script language), the ENAV interface handler 27 of the optical disk device A serially decodes the target meta data in accordance with a time stamp included in the meta data (time stamp 51 of FIG. 4) by using the meta data decoder 30 in a media decoder (S72).

According to the user's setting, the decoded meta data can be displayed or not. Meta data judges whether a region indicated by the meta data or a subtitle of explanation is always displayed, or not (S73). In the case where the judgment result is not shown usually, the meta data judges whether a user selects objects indicated by the meta data, or not (S74). In the case where the judgment result is always shown, or in the case where a mouse cursor or the like is superimposed on an object region in order to display such a region or subtitle, or in the case where a click operation or the like is made in a superimposed state, it becomes possible to display a region which can be selected by the user or display an explanation of that region as a subtitle in accordance with the information contained in the meta data (object region data 54 of FIG. 4 or object display information 58 of FIG. 5) or in accordance with ENAV document information.

An example of display of this subtitle is shown in FIG. 19. In FIG. 19, a subtitle 132 is displayed from a region of an actor which is an object. For example, object associated information such as "casting or actor's name or setting of the casting and the like" is displayed (S75). In addition, with respect to an actress, a similar subtitle 132 is displayed. For example, information such as region color of this subtitle or the shape, size, color, location of the subtitle can be described in the meta data or ENAV document.

Even if the user has selected setting which indicates that no subtitle is always displayed, for example, in the case where the user has selected a region with which meta data is associated, by using an input device (for example, in the case where the mouse cursor has been superimposed on the region with which the meta data is associated), it is possible to automatically display a region which can be selected by the user or automatically display an explanation of that region as a subtitle in accordance with the information contained in the meta data or ENAV document information.

Furthermore, in the case where the user has selected and determined a region with which meta data is associated by means of an operating portion 27-2 (for example, in a case where a mouse cursor 133 is superimposed in a region with which meta data is associated, and the user has clicked that region) (S76) or in the case where an operating script is described in meta data (S77), the meta data decoder 30 passes the operating script data described in that meta data to the ENAV interpreter 31. The ENAV interpreter 31 executes that operating script (S79).

For example, in the case where meta data has been associated with an actor on a screen of a DVD video in reproduction, if the user clicks that actor, reproduction of the predetermined DVD contents stored in a disk D for introducing that actor is carried out in accordance with the operating script (S80). Alternatively, as shown in FIG. 20, in order to display the latest information on that actor according to address information such as URL included in meta data, the ENAV contents 134 on an external server device S is acquired and reproduced via the Internet by working of an Internet connecting portion 36-2 such as a modem. In addition, apart from the operating script data described in meta data, for example, there is a case in which an event to be issued from the meta data decoder 30 to the ENAV interface handler 27 is described in the meta data. If any event has been described in the decoded meta data (S78), the meta data decoder 30 issues an event to the ENAV interface handler 27 (S81). If that event has been registered in the ENAV interface handler 27 (S82), a next operation (for example, reproduction of DVD contents or reproduction of EVAN contents on the server device S or the disk) is executed in accordance with the description of the ENAV document. (S83).

As has been described above, the optical disk device A according to the present invention enables settings of a variety of display functions as well as mere reproduce processing of image information and enable diversified image reproduce based on the meta data which is supplied from the server device S over a network or which is extended information read out from a disk.

In accordance with the various embodiments described above, one skilled in the art can achieve the present invention. Further, a variety of modified examples of these embodiments can be easily conceived by one skilled in the art, and, even if one does not have inventive ability, it is possible to apply the invention to a variety of embodiments. Therefore, the present invention covers a broad scope which does not conflict with disclosed principle and novel features, and is not limited to the above described embodiments.

## Claims

1. A reproducing apparatus **characterized by** comprising:
a reading portion (22) which reads image information stored in a disk (D),
a reproducing portion (23) which reproduces the image information read by the reader portion,
a specifying portion (27-2) which specifies an object on the reproduced image information, and
a display portion (30, 32) which makes a display relating to the object based on extended information associated with the object specified by the specifying portion.

2. A reproducing apparatus according to claim 1, **characterized in that** the extended information associated with the object is stored in the disk, and the reading portion reads the extended information.

3. A reproducing apparatus according to claim 1, **characterized in that** the display portion displays text information (132) included in the extended information associated with the object in a region adjacent to an object on a screen based on the image information or in a region specified according to the extended information.

4. A reproducing apparatus according to claim 1, **characterized by** further comprising a communication portion (29) which acquires information by providing an access to a server over a network based on address information included in the extended information associated with the object, wherein the display portion makes a display relating to the object based on the information from the server.

5. A reproducing apparatus according to claim 1, **characterized by** further comprising a communication portion (29) which acquires information from a server over a network based on address information included in the extended information associated with the object, wherein the display portion displays a browser screen based on the information from the server.

6. A reproducing apparatus according to claim 1, **characterized by** further comprising a communication portion (29) which acquires moving image information from a server over a network based on address information included in the extended information associated with the object, wherein the display portion reproduces the moving image information.

7. A reproducing apparatus according to claim 1, **characterized by** further comprising a communication portion (29) which acquires the extended information associated with the object from a server over a network.

8. A reproducing apparatus according to claim 1, **characterized by** further comprising a communication portion (29) which acquires the extended information associated with the object from a server over a network as a plurality of pockets.

9. A reproducing apparatus according to claim 1, **characterized by** further comprising a selector portion (30) which selects only specific extended information according to the extended information composed of a plurality of packets based on a reproduce state of the reproducing portion.

10. A reproducing apparatus according to claim 1, **characterized by** further comprising a communication portion (29) which detects a change of a reproduce state of the reproducing portion, and in response to the change, acquires and updates the extended information associated with the object from a server on a network.

11. A reproducing method **characterized by** comprising:
reading image information stored in a disk (D),
reproducing the image information read by the reader portion,
specifying an object on the reproduced image information, and
making a display relating to the object based on the extended information associated with the object specified by the specifying portion.

12. A reproducing method according to claim 11, **characterized in that** the extended information associated with the object is stored in the disk, and the extended information is read from the disk.

13. A reproducing method according to claim 11, **characterized in that** text information (132) included in the extended information associated with the object is displayed in a region adjacent to an object on a screen based on the image information or in a region specified according to the extended information.

14. A reproducing method according to claim 11, **characterized by** further comprising:
acquiring information by providing an access to a server over a network based on address information included in the extended information associated with the object, and
making a display relating to the object based on the information from the server.

15. A reproducing method according to claim 11, **characterized by** further comprising:
acquiring information from a server over a network based on address information included in the extended information associated with the object, and
displaying a browser screen based on the information from the server.

16. A reproducing method according to claim 11, **characterized by** further comprising:
acquiring moving image information from a server over a network based on address information included in the extended information associated with the object, and
reproducing the moving image information.

17. A reproducing method according to claim 11, **characterized by** further comprising:
acquiring the extended information associated with the object from a server over a network.

18. A reproducing method according to claim 11, **characterized by** further comprising:
acquiring the extended information associated with the object from a server over a network as a plurality of pockets.

19. A reproducing method according to claim 11, **characterized by** further comprising:
selecting only specific extended information according to the extended information composed of a plurality of packets based on a reproduce state of the reproducing portion.

20. A reproducing method according to claim 11, **characterized by** further comprising:
detecting a change of a reproduce state of the reproducing portion, and
in response to the change, acquiring and updating the extended information associated with the object from a server on a network.
